# FASCICULE DE BREVET EUROPEEN

(11) **EP 0 879 971 B1**
(45) Date de publication et mention de la délivrance du brevet: **19.03.2003**
(21) Numéro de dépôt: 98115385.1
(22) Date de dépôt: 23.05.1995
(51) Int. Cl.: F16B 29/00, F16B 5/02, B60S 1/04

(54) **Dispositif de fixation d'un ensemble sur la caisse d'un véhicule automobile et module d'essuyage comportant un tel dispositif**
Vorrichtung zur Befestigung einer Anordnung an einer Kraftfahrzeugkarosserie und Wischermodul mit einer derartigen Vorrichtung
Device for fastening an assembly to an automotive vehicle body and wiper module with such a device

(30) Priorité: 26.05.1994 FR 9406517
(43) Date de publication de la demande: 25.11.1998
(62) Demande divisionnaire de: 95107823.7
(73) Titulaire: VALEO SYSTEMES D'ESSUYAGE, 78321 La Verrière (FR)
(72) Inventeur: Morin, Pascal, 86100 Chatellerault (FR)
(74) Mandataire: Gamonal, Didier

(56) Documents cités:
- FR-A- 1 368 673
- FR-A- 1 541 433
- GB-A- 1 467 378
- US-A- 3 489 312

## Description

La présente invention concerne un ensemble comportant une platine pour la fixation sur la caisse d'un véhicule automobile selon le préambule de la revendication 1 (FR 1 541 433 A).

L'invention trouve notamment à s'appliquer pour le montage et la fixation d'un module d'essuyage de vitre du véhicule.

Un tel module d'essuyage comporte une platine de support qui porte les différents organes pour l'entraînement en rotation alternée dont moins un essuie-glace.

Selon une technique connue, la platine comporte une série de trous de fixation prévus pour être traversés chacun par le corps fileté d'une vis appartenant à un ensemble du type vis-écrou.

Selon un agencement connu, le corps fileté traverse un trou de la platine, un trou formé par exemple dans une rondelle d'amortissement interposée entre la platine et une face d'un élément de la caisse du véhicule, et un trou de l'élément de la caisse, pour être vissé dans un écrou qui est agencé sur l'autre face de l'élément de caisse et qui est reçu dans une cage de maintien de l'écrou.

Selon un agencement le plus couramment utilisé, la rondelle d'amortissement est réalisée sous la forme d'un support élastique monté dans le trou de la platine.

Les conceptions connues pour la réalisation d'une cage d'écrou sont des conceptions selon lesquelles la cage est un élément en tôle découpée et pliée à l'intérieur duquel est monté l'écrou et qui est ensuite emboîté élastiquement dans le trou formé dans l'élément de caisse, cet agencement étant complété par des moyens pour empêcher la rotation de la cage par rapport à l'élément de la caisse.

Ces exemples de conception sont particulièrement coûteux et difficiles à mettre en oeuvre, notamment dans le cadre d'une automatisation des opérations de montage et de fixation de sous-ensembles sur la caisse du véhicule.

La présente invention a pour but de proposer une nouvelle conception d'un dispositif de montage du type mentionné précédemment qui permette de remédier à ces inconvénients.

Dans ce but, l'invention propose un ensemble selon la revendication 1.

Selon d'autres modes particuliers de l'invention :
- le corps fileté appartient à une vis de serrage ;
- la pièce d'assemblage présente sensiblement une forme de révolution autour de l'axe de vissage ;
- la partie formant cage comporte un alésage étagé comportant un premier tronçon pour le passage à rotation du corps fileté et un deuxième tronçon de plus grande dimension qui reçoit l'écrou
- l'extrémité libre de la partie formant cage comporte des moyens de retenue axiale de l'écrou dans le deuxième tronçon ;
- l'alésage comporte un troisième tronçon de dimension inférieure à celle du deuxième tronçon ;
- l'extrémité libre de la partie formant cage est resserrée radialement vers l'intérieur ;
- la zone de raccordement entre les premier et second tronçons est conique ;
- le premier tronçon est conique ;
- la pièce d'assemblage est surmoulée sur l'écrou
- avant serrage, la pièce d'assemblage est emmanchée à force dans le trou de l'élément de caisse du véhicule.

L'invention propose également un module d'essuyage d'une vitre de véhicule automobile comportant une platine portant des organes d'entraînement d'au moins un essuie-glace, caractérisé en ce que la platine est fixée sur la caisse du véhicule au moyen d'au moins un dispositif de fixation conforme aux enseignements de l'invention.

D'autres caractéristiques et avantages de l'invention apparaîtront à la lecture de la description détaillée qui va suivre pour la compréhension de laquelle on se reportera au dessin annexé dans lequel :
- la figure 1 est une vue schématique, en section axiale, d'un premier exemple de réalisation d'un dispositif de fixation conforme aux enseignements de l'invention, qui est illustré avant serrage ;
- la figure 2 est une vue similaire à celle de la figure 1 qui illustre le dispositif de fixation après serrage ;
- la figure 3 est une vue similaire à celle de la figure 1 qui illustre un second mode de réalisation d'un dispositif de fixation conforme aux enseignements de l'invention ; et
- la figure 4 est une vue similaire à celle de la figure 1 qui illustre un troisième mode de réalisation d'un dispositif de fixation conforme aux enseignements de l'invention.

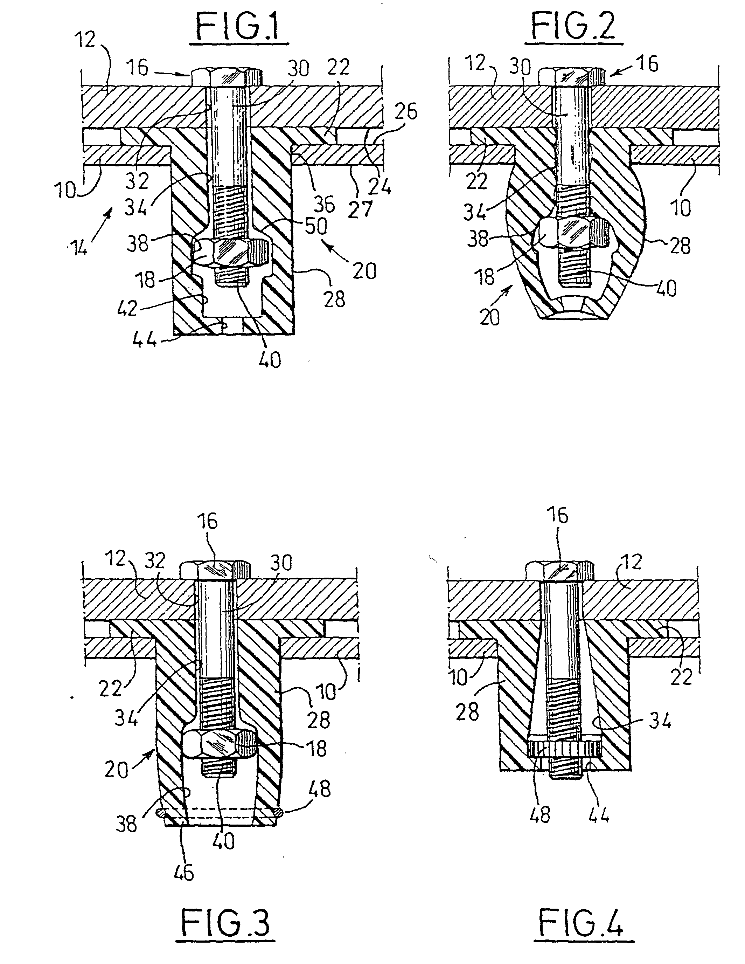

On a représenté sur la figure 1 une tôle 10 appartenant à un élément de structure de la caisse d'un véhicule automobile sur lequel est fixé une platine 12 appartenant par exemple à un module d'essuyage.

La platine 12 est fixée sur la tôle 10 au moyen d'un dispositif de fixation 14 qui est pour l'essentiel constitué d'un ensemble vis-écrou 16-18 et d'une pièce d'assemblage en matériau élastomère 20.

La pièce unique 20, qui est déformable élastiquement, est constituée par une rondelle supérieure 22 qui est interposée entre la face inférieure 24 de la platine 12 et la face supérieure 26 de la tôle 10.

La pièce 20 comporte également un corps 28 de forme générale extérieure cylindrique 28 qui fait fonction de cage de retenue pour l'écrou 18 et de cheville expansible et qui s'étend axialement au delà de la face inférieure 27 de la tôle 10.

Le corps fileté 30 de la vis 16 traverse successivement un trou 32 formé dans la tôle 12 et un premier tronçon 34 formé dans la partie supérieure du corps inférieur 28 de la pièce d'assemblage 20 qui traverse un trou 36 formé dans la tôle 10.

Afin d'empêcher une rotation relative de la pièce 20 par rapport à la tôle 10, lors de la phase initiale de serrage, le corps 28 est emmanché légèrement à force dans le trou 36.

Le premier tronçon 34 débouche dans un deuxième tronçon 38, de plus grand diamètre, dans lequel est inséré l'écrou 18 qui reçoit l'extrémité libre filetée 40 de la vis 16.

Afin d'empêcher, avant l'introduction de la vis 16, la chute verticale de l'écrou 18, l'alésage étagé formé dans le corps 28 de la pièce d'assemblage 20 se termine, à sa partie inférieure, par un troisième tronçon 42 dont le diamètre est inférieur à celui du deuxième tronçon 38.

L'écrou 18 peut initialement être introduit à force, par l'extrémité inférieure percée 44, jusqu'à occuper sa position illustrée sur la figure 1 dans le second tronçon 38, ou, selon une autre conception, la pièce unique d'assemblage 20 peut être surmoulée sur l'écrou 18.

L'assemblage et la fixation de la platine 12 s'effectue de la manière suivante.

L'opérateur, ou le robot d'assemblage, commence par mettre en place la pièce unique d'assemblage 20 dans sa position illustrée sur la figure 1 puis, il vient visser la vis 16 dont l'extrémité fileté 40 commence par se visser dans l'écrou 18 puis, sous l'action de la rotation poursuivie de la vis 16 et du fait de l'immobilisation en rotation de l'écrou 18 par rapport à l'assemblage, il provoque la montée progressive de l'écrou 18 qui provoque l'expansion radiale de la partie supérieure du corps 28 comme cela est illustré sur la figure 2.

A l'issue des opérations finales de serrage, la platine 12 est fixée sur la tôle 10 au moyen de la pièce unique d'assemblage 20 qui fait fonction de cheville expansible, et la partie supérieure 22 en forme de rondelle est interposée entre la platine 12 et la tôle 10 et fait ainsi fonction d'amortisseur de vibrations.

Dans la variante de réalisation illustrée sur la figure 3, la partie inférieure d'extrémité libre 46 du corps 28 de la pièce unique d'assemblage 20 est resserrée radialement vers l'intérieure par un joint élastique de serrage 48, de façon à éviter l'échappement axial de l'écrou 18 hors du deuxième tronçon 38 de l'alésage étagé formé dans le corps 28.

Comme on peut le voir sur les figures 1 à 3, la zone de raccordement 50 entre les premier 34 et deuxième 38 tronçon de l'alésage étagé est de profil conique de manière à faciliter l'effet d'expansion de la cheville lors des opérations de serrage.

Dans le troisième mode de réalisation illustré sur la figure 4, c'est la totalité de la longueur du premier tronçon 34 qui est de profil conique tandis que le second tronçon 38 est en tronçon sensiblement cylindrique dont la hauteur est réduite à celle de l'écrou 48 qui est ici réalisé sous la forme d'une rondelle taraudée en son centre et dont la surface cylindrique périphérique comporte des cannelures qui empêchent sa rotation à . l'intérieur du corps 28.

Le trou 44 formé à l'extrémité libre inférieure 46 fait fonction de troisième tronçon 42 pour l'alésage étagé formé dans le corps 28 qui évite la chute de l'écrou-rondelle 48 avant les opérations de montage et de serrage.

L'invention n'est pas limitée aux modes de réalisation qui viennent d'être décrits.

La notion de cage réalisée venue de matière avec la rondelle d'amortissement 22 englobe tous les moyens permettant d'assurer la même fonction, que l'écrou soit retenu directement à l'intérieur du corps 28 ou par exemple à l'extrémité inférieure de ce dernier.

L'écrou 18 peut également être "intégré" à la pièce unique d'assemblage 20 dont la partie de l'alésage intérieur est alors taraudée pour faire fonction d'écrou de serrage d'expansion.

## Revendications

1. Ensemble comportant une platine (12)et un dispositif (14) de fixation de la platine (12) sur la caisse (10) d'un véhicule automobile, le dispositif comportant un ensemble vis-écrou (16, 18), une rondelle (22) apte à être interposée entre la platine (12) et une première face (26) d'un élément (10) de caisse du véhicule et une cage de maintien de l'écrou (18), dans lequel le corps fileté (30-40) de l'ensemble vis-écrou, destiné à traverser un trou (36) de l'élément (10) de la caisse pour être vissé dans l'écrou (18), traverse un trou (32) de la platine, un trou (34) formé dans la rondelle (22), l'un des éléments de l'ensemble vis-écrou (16, 18) est apte à être agencé sur l'autre face (27) de l'élément de caisse (10) et étant reçu dans la cage (28), et la rondelle (22) ainsi que la cage (28) sont réalisées en une seule pièce d'assemblage (20) dont la partie formant cage (28) se déforme en expansion lors des opérations de serrage de l'ensemble vis-écrou, **caractérisé en ce que** la rondelle est une rondelle d'amortissement, **en ce que** la rondelle (22) et la cage (28) sont réalisées en matériau élastomère, ou en caoutchouc, et **en ce que** l'élément de l'ensemble vis-écrou reçu dans la cage (28) est retenu à l'extrémité inférieure (46) de cette cage avant les opérations de montage et de serrage.

## Claims

1. An assembly comprising a plate (12) and a device (14) for fixing the plate (12) to the body (10) of a motor vehicle, the device comprising a nut and screw assembly (16, 18), a washer (22) able to be interposed between the plate (12) and a first face (26) of a vehicle bodywork element (10) and a cage for holding the nut (18), in which the threaded body (30-40) of the nut and screw assembly, intended to pass through a hole (36) in the bodywork element (10) in order to be screwed into the nut (18), passes through a hole (32) in the plate, a hole (34) formed in the washer (22), one of the elements of the nut and screw assembly (16, 18) is able to be arranged on the other face (27) of the bodywork element (10) and being received in the cage (28), and the washer (22) and the cage (28) are produced as a single assembly piece (20), whose part forming a cage (28) deforms in expansion during operations of tightening the nut and screw assembly, **characterised in that** the washer is a damping washer, **in that** the washer (22) and the cage (28) are produced from elastomer material, or rubber, and **in that** the nut and screw assembly element received in the cage (28) is held at the bottom end (46) of this cage before the mounting and tightening operations.

## Patentansprüche

1. Vorrichtung mit einer Platte (12) und einer Befestigungsvorrichtung (14) der Platte (12) am Kasten (10) eines Kraftfahrzeugs, wobei die Vorrichtung eine Einheit Schraube/Mutter (16, 18), eine Scheibe (22), die zwischen der Platte (12) und einer ersten Fläche (26) eines Elements (10) des Fahrzeugskastens eingefügt werden kann, und einen Rückhaltkäfig der Mutter (18), in dem der Gewindekörper (30-40) der Einheit Schraube/Mutter, der ein Loch (36) des Elements (10) des Kastens durchqueren soll, um in die Mutter (18) geschraubt zu werden, ein Loch (32) der Platte, ein in der Scheibe (22) ausgebildetes Loch (34) umfasst, wobei eines der Elemente der Einheit Schraube/Mutter (16, 18) auf der anderen Fläche (27) des Kastenelements (10) vorgesehen sein kann und im Käfig (28) aufgenommen wird, wobei die Scheibe (22) sowie der Käfig (28) aus einem einzigen Verbindungsteil (20) bestehen, dessen den Käfig (28) bildender Teil sich bei den Einspannarbeiten der Einheit Schraube/Mutter aufspreizt, **dadurch gekennzeichnet, dass** die Scheibe eine Dämpferscheibe ist, dass die Scheibe (22) und der Käfig (28) aus Elastomer oder aus Gummi bestehen, und dass das im Käfig (28) aufgenommene Element der Einheit Schraube/Mutter vor den Montage- und Einspannarbeiten am unteren Ende (46) dieses Käfigs festgehalten wird.
